(19) Europäisches Patentamt / European Patent Office / Office européen des brevets

(11) **EP 3 769 867 B1**

(12) **EUROPEAN PATENT SPECIFICATION**

(45) Date of publication and mention
of the grant of the patent:
**22.11.2023 Bulletin 2023/47**

(21) Application number: **19770830.8**

(22) Date of filing: **13.03.2019**

(51) International Patent Classification (IPC):
**B22F 3/11** (2006.01)     **B22F 1/052** (2022.01)
**B22F 7/00** (2006.01)     **C22C 1/04** (2023.01)
**H01M 4/04** (2006.01)     **H01M 4/38** (2006.01)
**H01M 4/02** (2006.01)

(52) Cooperative Patent Classification (CPC):
(C-Sets available)
**H01M 4/38; B22F 1/052; B22F 3/1103;**
**B22F 7/002; C22C 1/0458; H01M 4/0433;**
**H01M 4/0471; B22F 2998/10; B22F 2999/00;**
H01M 2004/021; Y02E 60/10; Y02E 60/50    (Cont.)

(86) International application number:
**PCT/JP2019/010233**

(87) International publication number:
**WO 2019/181684 (26.09.2019 Gazette 2019/39)**

(54) **POROUS TITANIUM-BASED SINTERED BODY, METHOD FOR PRODUCING THE SAME, AND ELECTRODE**

PORÖSER GESINTERTER KÖRPER AUF TITANBASIS, VERFAHREN ZUR HERSTELLUNG DESSELBEN UND ELEKTRODE

CORPS FRITTÉ POREUX À BASE DE TITANE, SON PROCÉDÉ DE FABRICATION ET ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.03.2018 JP 2018051693**

(43) Date of publication of application:
**27.01.2021 Bulletin 2021/04**

(73) Proprietor: **TOHO TITANIUM CO., LTD.**
**Chigasaki-shi, Kanagawa 253-8510 (JP)**

(72) Inventors:
• **GOTO, Yasuhiko**
**Chigasaki-shi, Kanagawa 253-8510 (JP)**
• **TSUMAGARI, Shogo**
**Chigasaki-shi, Kanagawa 253-8510 (JP)**
• **FUJI, Takahiro**
**Chigasaki-shi, Kanagawa 253-8510 (JP)**

(74) Representative: **Müller-Boré & Partner**
**Patentanwälte PartG mbB**
**Friedenheimer Brücke 21**
**80639 München (DE)**

(56) References cited:
**EP-A1- 1 361 010**     **WO-A1-02/064293**
**JP-A- S5 550 448**     **JP-A- H04 176 309**
**JP-A- H04 176 309**     **JP-A- 2004 149 842**
**JP-A- 2011 099 146**     **JP-A- 2011 099 146**
**JP-A- 2013 084 551**

EP 3 769 867 B1

(52) Cooperative Patent Classification (CPC): (Cont.)

C-Sets
B22F 2998/10, C22C 1/0458, B22F 1/052,
B22F 3/02, B22F 3/10, B22F 7/002

**Description**

[Technical Field]

The present invention relates to a porous titanium-based sintered body, and particularly relates to a porous titanium-based sintered body that is preferably utilized as an electrode for a fuel battery or a large storage battery, a member for a heat exchanger, a filter, or the like.

[Background Art]

Of porous titanium-based sintered bodies obtained by sintering titanium-based powders, a porous titanium-based sintered body obtained by sintering a titanium powder has been used as a filter for a high-temperature melt or the like from long ago, but in recent years, it has come into the limelight also in uses as a base material of an electrode plate for a nickel-metal hydride battery or a lithium battery, a biomaterial, a catalyst base material, a member of a fuel battery, and the like, and development thereof has been promoted.

As a method for producing such a porous titanium-based sintered body, a method for producing a porous titanium sintered body having a high porosity by sintering titanium fibers is disclosed in, for example,

Patent Literature 1.

Moreover, a method for producing a sintered body having a porosity of 35% to 55% by sintering spherical particulates obtained by gas atomization of titanium or a titanium alloy is disclosed in, for example, Patent Literature 2.

In Patent Literature 3, an apparatus for homogeneously dispersing and filling a fibrous raw material or a powdery raw material is disclosed. It is disclosed that in its Example 2, a porous titanium sintered body having a porosity of 65% was produced by laminating a raw material titanium powder of a 150 $\mu$m-mesh sieve net-passed product (average particle diameter: 90 $\mu$m) on a molten silica plate and sintering the powder at 900°C to 1000°C in a vacuum atmosphere.

JP 2004 149842 A provides a manufacturing method of a thin titanium sintered compact suitable in particular for cylindrical shape titanium filters.

[Citation List]

[Patent Literature]

> [Patent Literature 1]
> Japanese Patent Laid-Open No. 2012-172179
> [Patent Literature 2]
> Japanese Patent Laid-Open No. 2002-66229
> [Patent Literature 3]
> Japanese Patent Laid-Open No. 2007-262570

[Summary of Invention]

[Technical Problem]

However, the porous titanium sintered body obtained by sintering titanium fibers has a high porosity but has a small specific surface area, as in the Patent Literature 1, and therefore, when it is used as a carrier that is a porous titanium-based sintered body on which a catalyst is supported, in the vicinity of a surface of the catalyst a gas or a liquid being allowed to undergo reaction, there is room for improvement on the reaction efficiency.

In the porous titanium sintered body obtained by sintering a spherical titanium powder produced by a gas atomization method, as in the Patent Literature 2, a spherical titanium powder having a high bulk density has been sintered, and therefore, the porous body has a low porosity and a small average pore diameter. Accordingly, there is a problem that pressure loss caused when a gas or a liquid is allowed to pass increases, and the gas permeability or the liquid permeability is poor.

In Example 2 of the Patent Literature 3, a 150 $\mu$m-mesh sieve net-passed product was used, but there is no further disclosure of a technique about the particle diameter control. In Example 2 of the Patent Literature 3, only a porosity is disclosed, but studies of specific surface area, pore diameter, etc. are not made. Particularly to this example, there is a demand for further increase in the average pore diameter.

Recently, there is an increasing tendency to desire a porous titanium-based sintered body to have a structural strength. For example, when a porous titanium-based sintered body is handled as an electrode or a part of a structure, a high strength is desired. In the case where the electrode is taken as one structural member, enhancement of gas permeability or liquid permeability is expected as spaces in the sheet member increase, but in contrast, the strength is lowered. The lowering of strength leads to occurrence of defective products such as broken products and means lowering of handing property of the sheet member. That is to say, an increase in strength has been desired from the viewpoint of improvement in handling property.

When the gas permeability or the liquid permeability is attempted to be enhanced, there is room for improvement on the results of studies of the porosity only. Even if the void volume in the porous body is sufficiently ensured, the gas permeability or the liquid permeability is not improved when there are many closed pores through which a gas or a liquid cannot pass. From the viewpoint of gas permeability or liquid permeability, it is preferable that the porous body have a high porosity and be provided with many through holes through which a gas or a liquid can pass. Mercury penetration can be utilized in the studies of the number of through holes because mercury is sent to the inner side than the inlets of pores of the porous body. It is thought that if the average pore diameter determined by the mercury penetration method can be increased and if the porosity is high, the gas permeability or the liquid permeability can be improved. Thus, the present inventors have come to focus on a combination of a porosity and an average pore diameter.

Since the specific surface area exerts influence on the reaction efficiency, there is a demand for ensuring a certain level of a specific surface area. Even if the gas permeability or the liquid permeability is good, an electrode and a member for a heat exchanger are required to maintain high reaction efficiency.

Thus, there resides a problem that a porous titanium-based sintered body is further increased in strength while maintaining good gas permeability or liquid permeability and reaction efficiency.

Accordingly, it is an object of the present invention to provide a porous titanium-based sintered body having a high porosity, a large average pore diameter, a large specific surface area and a higher strength.

[Solution to Problem]

The present inventors had earnestly studied and had acquired the following knowledge.

First, the present inventors had presumed that for ensuring good gas permeability or liquid permeability, a crushed product, not a spherical titanium-based powder produced by a gas atomization method, was effective. The crushed product had an ununiform shape as compared with the gas atomization product and had many angular parts. Therefore, the present inventors had thought that the number of titanium-based powder particles filled per unit volume could be appropriately reduced. Moreover, they had thought that a high porosity and a large average pore diameter were made compatible by utilizing the shape of the crushed product.

When the shape of the crushed product was focused on, a relatively large surface area could be ensured in the case where the particles of the titanium-based powder that was the crushed product were adjacent to each other. It was presumed that such constitution made it possible to support a catalyst or the like in a large amount and to attain good reaction efficiency. Hence, the present inventors had thought that a high porosity, a large average pore diameter and a large specific surface area could be ensured at the same time, and good gas permeability or liquid permeability and reaction efficiency could be ensured.

Next, the present inventors had furthermore earnestly studied and had acquired knowledge that control of the sintering temperature of the titanium-based powder was surprisingly effective for enhancement of a strength of the porous titanium-based sintered body. When sintering of a titanium-based powder was carried out in the specific temperature range, lowering of a porosity could be suppressed from a macro-perspective because the state of the titanium-based powder when filled was maintained, and from a micro-perspective, the sintered area of the titanium-based powder could be increased. In the high-temperature sintering, there was usually concern about lowering of a porosity. However, when a titanium-based powder that was a crushed product having a low circularity and a low bulk density was sintered at a high temperature, the sintered area of the titanium-based powder increases while maintaining a high porosity, as compared with a case where the powder was sintered at a lower temperature. Therefore, the present inventors had thought that if a titanium-based powder of a specific size was used as a raw material, the increase in the sintered area could be effectively utilized and an increase in strength could be achieved.

On the basis of the above knowledge, the present invention has been completed. The above problem can be solved by the present invention shown below.

That is to say, the present invention is defined in the appended claims.

[Advantageous Effect of Invention]

According to the present invention, a porous titanium-based sintered body having a high porosity, a large average pore diameter, a large specific surface area and a high strength can be provided.

[Brief Description of Drawings]

[Figure 1] Figure 1 is an optical microscope observation image of a porous titanium-based sintered body of the invention Example 1.
[Figure 2] Figure 2 is a schematic view to describe a bending test for determining a bending strength.

[Description of Embodiments]

The porous titanium-based sintered body of the present invention is a porous titanium-based sintered body, having a porosity of 50% to 75%, an average pore diameter of 23 $\mu$m to 45 $\mu$m, and a specific surface area of 0.020 $m^2$/g to 0.065 $m^2$/g, and having a bending strength of 22 MPa or more. In usual, the porous titanium-based sintered body is a sintered body of a particulate titanium-based powder and has many pores inside.
The titanium-based powder according to the present invention is a titanium powder, a hydrogenated titanium powder, a titanium powder coated with titanium nitride or titanium silicide, a titanium alloy powder, or a composite material of a combination thereof. Examples of the titanium-based powders in the present invention include a titanium powder formed of metallic titanium and inevitable impurities, and a titanium alloy powder formed of metallic titanium, an alloy metal and inevitable impurities. For example, the titanium alloy is an alloy of titanium and a metal (alloy metal) comprising one or more of Fe, Sn, Cr, Al, V, Mn, Zr or Mo, and specific examples thereof include Ti-6-4 (Ti-6Al-4V), Ti-5Al-2.5Sn, Ti-8-1-1 (Ti-8Al-1Mo-1V), Ti-6-2-4-2 (Ti-6Al-2Sn-4Zr-2Mo-0.1Si), Ti-6-6-2 (Ti-6Al-6V-2Sn-0.7Fe-0.7Cu), Ti-6-2-4-6 (Ti-6Al-2Sn-4Zr-6Mo), SP700 (Ti-4.5Al-3V-2Fe-2Mo), Ti-17 (Ti-5Al-2Sn-2Zr-4Mo-4Cr), $\beta$-CEZ (Ti-5Al-2Sn-4Zr-4Mo-2Cr-1Fe), TIMETAL555, Ti-5553 (Ti-5Al-5Mo-5V-3Cr-0.5Fe), TIMETAL21S (Ti-15Mo-2.7Nb-3Al-0.2Si), TIMETAL LCB (Ti-4.5Fe-6.8Mo-1.5Al), 10-2-3 (Ti-10V-2Fe-3Al), Beta C (Ti-3Al-8V-6Cr-4Mo-4Cr), Ti-8823 (Ti-8Mo-8V-2Fe-3Al), 15-3 (Ti-15V-3Cr-3Al-3Sn), BetaIII (Ti-11.5Mo-6Zr-4.5Sn), and Ti-13V-11Cr-3Al. In the above, the number attached before each alloy metal indicates a content (mass%). For example, "Ti-6Al-4V" indicates a titanium alloy containing 6 mass% of Al and 4 mass% of V as an alloy metal.
The porous titanium-based sintered body of the present invention has a porosity of 50% to 75%, an average pore diameter of 23 $\mu$m to 45 $\mu$m, and a specific surface area of 0.020 $m^2$/g to 0.065 $m^2$/g.
In the present invention, by setting the porosity of the porous titanium-based sintered body to 50% to 75%, a large specific surface area can be ensured while ensuring good gas permeability or liquid permeability. The lower limit side of the porosity of the porous titanium-based sintered body of the present invention is preferably 55% or more. On the other hand, the upper limit side of the porosity of the porous titanium-based sintered body of the present invention is preferably 70% or less, more preferably 68% or less, still more preferably 65% or less, and even more preferably 63% or less. A porosity of less than 50% means that the porous titanium-based sintered body is too dense. That is to say, there is concern that the gas permeability or the liquid permeability becomes insufficient. On the other hand, a porosity of more than 75% means that the porous titanium-based sintered body is too coarse. That is to say, there is concern about insufficient specific surface area or insufficient strength.
The porosity is a proportion of voids per unit volume of the porous titanium-based sintered body and is expressed as percentage. In the present invention, the porosity is calculated from the following expression using a volume V ($cm^3$) of the porous titanium-based sintered body, a mass M (g) of the porous titanium-based sintered body, and a true density D ($g/cm^3$) of a metal part that forms the sintered body (e.g., true density of pure titanium: 4.51 $g/cm^3$). The volume V indicates an apparent volume of the porous titanium-based sintered body.

$$\text{Porosity (\%)} = 100 - ((M/V)/D) \times 100$$

The average pore diameter of the porous titanium sintered body of the present invention is 23 $\mu$m to 45 $\mu$m. By combining a high porosity with a large average pore diameter, good gas permeability or liquid permeability is ensured. The average pore diameter of the porous titanium sintered body of the present invention is preferably 23 $\mu$m to 40 $\mu$m, and more preferably 23 $\mu$m to 35 $\mu$m. If the average pore diameter is less than 23 $\mu$m, there is concern about an excessive increase in pressure loss. If the average pore diameter exceeds 45 $\mu$m, there is concern about a decrease in contact area (specific surface area).
In the present invention, the average pore diameter is determined by a mercury penetration method (Washburn model).

$$\text{Average pore diameter } (\mu m) = 2 \times V_P/S_P$$

wherein $V_P$ is a pore volume (cc/g), and $S_P$ is a pore specific surface area (m$^2$/g).

-Measurement conditions: JIS R 1655 (2003)-

Pressure measuring method: strain-gauge method
Temperature: room temperature
Pretreatment: After pressure reduction to about 6 Pa at room temperature, mercury penetration is started.

In the present invention, it is possible to set the specific surface area of the porous titanium-based sintered body to 0.020 m$^2$/g to 0.065 m$^2$/g, and the specific surface area is made compatible with good gas permeability or liquid permeability. The lower limit side of the specific surface area of the porous titanium-based sintered body of the present invention is preferably 0.025 m$^2$/g or more, and more preferably 0.030 m$^2$/g or more. The upper limit side of the specific surface area of the porous titanium-based sintered body of the present invention is preferably 0.060 m$^2$/g or less, and more preferably 0.055 m$^2$/g or less. The specific surface area has great influence on the heat removal or the reaction efficiency. If the specific surface area is less than 0.020 m$^2$/g, the amount of a catalyst supported becomes insufficient, so that there is concern about an excessive decrease in the reaction area, and because the sites that come into contact with a gas or a liquid excessively decrease, there is also concern about, for example, insufficient cooling during heat removal. On the other hand, if the specific surface area is more than 0.065 m$^2$/g, the sites that come into contact with a gas or a liquid excessively increase, and therefore, there is concern about deterioration of gas permeability or liquid permeability. In the present invention, the specific surface area is determined based on JIS:Z8831:2013 "Determination of the specific surface area of powders (solids) by gas adsorption-BET method".

The bending strength of the porous titanium-based sintered body of the present invention is 22 MPa or more. In the porous titanium-based sintered body of the present invention, the sintered area of the titanium-based powder that is a raw material is appropriately ensured, and therefore, a bending strength of 22 MPa or more can be attained. The bending strength of the porous titanium-based sintered body of the present invention is preferably 25 MPa or more. The upper limit side of the bending strength of the porous titanium-based sintered body of the present invention is not particularly limited, but it is preferably, for example, 65 MPa or less. The upper limit side of the bending strength of the porous titanium-based sintered body of the present invention may be 45 MPa or less, or may be 35 MPa or less.

The bending strength is a mechanical property having been reduced in influence of thickness or length of a specimen. In the present invention, the bending strength is determined in accordance with JIS Z2248 (2006) "Metallic materials-Bend test". The conditions adopted in the example described later are as follows.

Specimen size: 15 mm × 50 mm × 0.5 mm
Test temperature: 23°C
Indentation rate: 2.0 mm/min
Inter-fulcrum distance: 40 mm
Bending radius (indenter/lower fulcrum tip): R 5 mm
Specimen setting direction: A surface having high surface roughness is regarded as an indenter side, and a maximum load (N) is determined. Using the following expression, conversion into a bending strength is carried out.

[Expression 1]

$$\sigma = \frac{M_{max}}{Z} = \frac{F_{max}\,L}{4} \bigg/ \frac{wt^2}{6} = \frac{3F_{max}\,L}{2wt^2}$$

σ: bending strength (MPa), F: (bending) load (N), L: inter-fulcrum distance (mm), t: specimen thickness (mm), w: specimen width (mm), Z: section modulus[*1] (mm$^3$), M: bending moment[*2] (N-mm)

[*1]: Section modulus $Z = wt^2/6$ (value determined by only a shape of section)
[*2]: Bending moment $M = F_{max} \times L/4$ (because pressure is applied to the center of the sample)

Next, the production method of the present invention will be described.

The method for producing a porous titanium-based sintered body of the present invention is a method for producing a porous titanium-based sintered body, comprising the step of placing a titanium-based powder having an average circularity of 0.85 or less and having D10 of 40 $\mu$m or more and D50 of 65 $\mu$m to 100 $\mu$m, the D10 and the D50 being obtained by particle size distribution measurement, in a mold by dry process without substantially applying pressure, and the step of sintering the powder at higher than 900°C and 1000°C or lower.

The average circularity of the titanium-based powder for use in the production method of the present invention is 0.85 or less. The average circularity of the titanium-based powder is preferably 0.83 or less. On the other hand, if the average circularity exceeds 0.85, the shape of the titanium-based powder comes too close to a sphere, and therefore, the bulk density becomes too high, and the porous titanium-based sintered body may become too dense.

In the present invention, the average circularity of the titanium-based powder is determined by the following method. Using an electron microscope, a perimeter (A) of a projected area of a particle is measured, and when a perimeter of a circle having the same area as the projected area is taken as (B), B/A is taken as a circularity. The average circularity is obtained by pouring particles together with a carrier liquid into a cell, photographing images of a large amount of particles by a CCD camera, measuring a perimeter (A) of a projected area of each particle and a perimeter (B) of a circle having the same area as the projected area from each particle image of 1000 to 1500 particles, calculating a circularity, and determining an average value of circularities of the particles.

As the shape of the particle comes close to a true sphere, the numerical value of the circularity increases, and the circularity of a particle having a shape of a perfect true sphere becomes 1. Contrary to this, as the shape of the particle becomes further away from a true sphere, the numerical value of the circularity decreases.

The titanium-based powder for use in the production method of the present invention is a titanium-based powder having D10 of 40 $\mu$m or more and D50 of 65 $\mu$m to 100 $\mu$m, the D10 and the D50 being obtained by particle size distribution measurement. The present inventors have acquired knowledge that when a titanium-based powder that is a crushed product is sintered at a high temperature, the sintered area of the titanium-based powder increases. That is to say, when a high strength is attempted to be attained while ensuring good porosity, average pore diameter and specific surface area, it is advantageous to utilize a titanium-based powder having a certain size. A fine powder is undesirable because the pores may be closed by the powder. In the present invention, therefore, D10 of the titanium-based powder is set to 40 $\mu$m or more. D10 of the titanium-based powder is preferably 42 $\mu$m or more, and more preferably 45 $\mu$m or more. In the present invention, D50 of the titanium-based powder is set to 65 $\mu$m to 100 $\mu$m. By using a titanium-based powder having this constitution, the porosity of the porous titanium-based sintered body can be increased, the average pore diameter thereof can be increased, and the specific surface area thereof can be increased. The lower limit side of D50 of the titanium-based powder is preferably 70 $\mu$m or more. The upper limit side of D50 of the titanium-based powder is preferably 90 $\mu$m or less, and more preferably 85 $\mu$m or less.

In the present invention, D10 and D50 indicate particle diameters by which volume-based cumulative distributions in the measurement of particle size distribution as determined by a laser diffraction/scattering method become 10% and 50%, respectively. In detail, the titanium-based powder particle size distribution is measured by the following method, and D10 and D50 are measured. That is to say, they are measured based on JIS Z8825:2013.

In the production method of the present invention, the titanium-based powder is placed in a mold by dry process without substantially applying pressure. By placing the titanium-based powder in a mold without substantially applying pressure, the titanium-based powder is bridged in a natural state, and a porous titanium-based sintered body having a high porosity can be obtained. The expression "bridged" referred to herein indicates that the powder forms an arch-shaped cavity. On the other hand, if the titanium-based powder is placed in a mold by wet process, the titanium-based powder accumulates while having anisotropy because of resistance of a fluid, and therefore, desired porosity and average pore diameter may not be obtained. Moreover, if the titanium-based powder is placed in a mold by wet process, the titanium-based powder may be filled densely up to a density equivalent to tap density. If the pressure applied to the upper surface of the titanium-based powder in a mold is too high when the titanium-based powder is placed in the mold, the porosity and the average pore diameter do not increase.

In the present invention, the expression "without substantially applying pressure" indicates that excepting a force applied to the titanium-based powder under the titanium-based powder's own weight when the titanium-based powder is filled in the mold or a force applied to the upper surface of the titanium-based powder in the mold when the titanium-based powder that has overflown and is present above the upper edge of the mold is levelled off after filling of the titanium-based powder in the mold, the pressure of a force intendedly applied to the upper surface of the titanium-based powder in the mold is $1 \times 10^{-2}$ MPa or less. The pressure applied to the upper surface of the titanium-based powder in the mold is a value obtained by dividing the force applied to the whole of the upper surface of the titanium-based powder-filled part of the mold by the area of the upper surface of the filled part. In the present invention, the expression "dry process" indicates that water or an organic solvent is not intendedly used.

A material of the mold for use in the present invention can be appropriately selected as long as the material does not react with the titanium-based powder, can withstand high temperatures and can be inhibited from thermal expansion. For example, quartz, alumina, graphite, carbon, cordient, indium oxide, calcia, silica, magnesia, zirconia, spinel, silicon carbide, aluminum nitride, boron nitride or mullite is preferable as the material of the mold. A more preferred material of the mold is quartz, alumina, carbon, calcia, magnesia, zirconia, boron nitride or the like by the reason of good workability.

In the production method of the present invention, the titanium-based powder is sintered at higher than 900°C and 1000°C or lower. By the sintering in this temperature range, an increase in strength of the porous titanium-based sintered body produced is achieved while ensuring a large average pour diameter of the porous titanium-based sintered body. The sintering temperature is the highest reaching temperature during sintering. If the sintering temperature is 900°C or lower, the desired high strength cannot be attained even if the porosity, the average pour diameter and the specific surface area can be favorably ensured. The lower limit side of the sintering temperature is preferably 920°C or higher, more preferably 930°C or higher, and still more preferably 950°C or higher. On the other hand, the upper limit side of the sintering temperature is 1000°C or lower. Even if the sintering temperature is excessively raised, a special effect is hard to expect, and it is disadvantageous in terms of cost. Moreover, the shape of the titanium-based powder excessively collapses in some cases, and there is concern about lowering of a porosity, an average pore diameter and a specific surface area.

In the production method of the present invention, the sintering time for sintering the titanium-based powder is appropriately selected.

In the method for producing a porous titanium-based sintered body of the present invention, sintering of the titanium-based powder is usually carried out under reduced pressure. Examples of methods for sintering the titanium-based powder include:

(1) a method comprising placing the titanium-based powder in a mold, then installing pressure reducing means in the mold, tightly closing the mold, reducing the pressure inside the mold by the pressure reducing means, then removing the pressure reducing means while maintaining a state of reduced pressure, setting the mold in a sintering furnace, and heating the titanium-based powder to sinter the powder;

(2) a method comprising placing the titanium-based powder in a mold, then installing pressure reducing means in the mold, tightly closing the mold, setting the mold in a sintering furnace, reducing the pressure inside the mold by the pressure reducing means in the furnace, and heating the titanium-based powder to sinter the powder after terminating pressure reduction or while further continuing pressure reduction; and

(3) a method comprising placing the titanium-based powder in a mold, then setting the mold in a sintering furnace, reducing the pressure inside the furnace together with the mold, and heating the titanium-based powder to sinter the powder after terminating pressure reduction or while further continuing pressure reduction.

In the present invention, the pressure of an atmosphere in which the titanium-based powder is sintered is $5.0\times10^{-3}$ Pa or less. If the pressure of the atmosphere is too high, the titanium-based powder is oxidized by excess oxygen present in the atmosphere, and the sintering does not easily take place.

As the porous titanium-based sintered body of the present invention, one obtained by placing a titanium-based powder having an average circularity of 0.85 or less and having D10 of 40 $\mu$m or more and D50 of 65 $\mu$m to 100 $\mu$m, the D10 and the D50 being obtained by particle size distribution measurement, in a mold by dry process without substantially applying pressure, and sintering the powder at higher than 900°C and 1000°C or lower (hereinafter, also referred to as a porous titanium-based sintered body of a first embodiment of the present invention) can be mentioned.

The titanium-based power according to the porous titanium-based sintered body of the first embodiment of the present invention is the same as the titanium-based powder according to the porous titanium-based sintered body of the present invention. That is to say, the average circularity of the titanium-based powder according to the porous titanium-based sintered body of the first embodiment of the present invention is 0.85 or less. The average circularity of the titanium-based powder is preferably 0.83 or less. On the other hand, if the average circularity exceeds 0.85, the shape of the titanium-based powder comes too close to a sphere, and therefore, the bulk density becomes too high, and the porous titanium-based sintered body may become too dense.

The titanium-based powder according to the porous titanium-based sintered body of the first embodiment of the present invention is a titanium-based powder having D10 of 40 $\mu$m or more and D50 of 65 $\mu$m to 100 $\mu$m, the D10 and the D50 being obtained by particle size distribution measurement. The present inventors have acquired knowledge that when a titanium-based powder that is a crushed product is sintered at a high temperature, the sintered area of the titanium-based powder increases. That is to say, when a high strength is attempted to be attained while ensuring good porosity, average pore diameter and specific surface area, it is advantageous to utilize a titanium-based powder having a certain size. A fine powder is undesirable because the pores may be closed by the powder. In the present invention, therefore, D10 of the titanium-based powder is set to 40 $\mu$m or more. D10 of the titanium-based powder is preferably 42 $\mu$m or more, and more preferably 45 $\mu$m or more. In the present invention, D50 of the titanium-based powder is set to 65 $\mu$m to 100 $\mu$m. By using a titanium-based powder having this constitution, the porosity of the porous titanium-based sintered body can be increased, the average pore diameter thereof can be increased, and the specific surface area thereof can be increased. The lower limit side of D50 of the titanium-based powder is preferably 70 $\mu$m or more. The upper limit side of D50 of the titanium-based powder is preferably 90 $\mu$m or less, and more preferably 85 $\mu$m or less.

The porous titanium-based sintered body of the first embodiment of the present invention is one obtained by placing the titanium-based powder in a mold by dry process without substantially applying pressure, heating the powder under reduced pressure, at $5.0 \times 10^{-3}$ Pa or less, and thereby sintering the powder.

The sintering temperature of the titanium-based powder is higher than 900°C and 1000°C or lower. By the sintering in this temperature range, an increase in strength of the porous titanium-based sintered body is achieved. The sintering temperature is the highest reaching temperature during sintering. If the sintering temperature is 900°C or lower, the desired high strength cannot be attained even if the porosity, the average pour diameter and the specific surface area can be favorably ensured. The lower limit side of the sintering temperature is preferably 920°C or higher, more preferably 930°C or higher, and still more preferably 950°C or higher. On the other hand, the upper limit side of the sintering temperature is 1000°C or lower. Even if the sintering temperature is excessively raised, a special effect is hard to expect, and it is disadvantageous in terms of cost. Moreover, the shape of the titanium-based powder excessively collapses in some cases, and there is concern about lowering of the porosity and the specific surface area.

The porous titanium-based sintered body of the first embodiment of the present invention is a porous titanium-based sintered body having a porosity of 50% to 75%, an average pore diameter of 23 $\mu$m to 45 $\mu$m, a specific surface area of 0.020 m$^2$/g to 0.065 m$^2$/g, and a bending strength of 22 MPa or more.

The porous titanium-based sintered body of the first embodiment of the present invention has a porosity of 50% to 75%, an average pore diameter of 23 $\mu$m to 45 $\mu$m, and a specific surface area of 0.020 m$^2$/g to 0.065 m$^2$/g.

In the present invention, by setting the porosity of the porous titanium-based sintered body of the first embodiment to 50% to 75%, a large specific surface area can be ensured while ensuring good gas permeability or liquid permeability. The lower limit side of the porosity of the porous titanium-based sintered body of the first embodiment of the present invention is preferably 55% or more. On the other hand, the upper limit side of the porosity of the porous titanium-based sintered body of the first embodiment of the present invention is preferably 70% or less, more preferably 68% or less, still more preferably 65% or less, and even more preferably 63% or less. A porosity of less than 50% means that the porous titanium-based sintered body is too dense. That is to say, there is concern that the gas permeability or the liquid permeability becomes insufficient. On the other hand, a porosity of more than 75% means that the porous titanium-based sintered body is too coarse. That is to say, there is concern about insufficient specific surface area or insufficient strength.

The average pore diameter of the porous titanium sintered body of the first embodiment of the present invention is 23 $\mu$m to 45 $\mu$m. By combining a high porosity with a large average pore diameter, good gas permeability or liquid permeability is ensured. The average pore diameter of the porous titanium sintered body of the first embodiment of the present invention is preferably 23 $\mu$m to 40 $\mu$m, and more preferably 23 $\mu$m to 35 $\mu$m. If the average pore diameter is less than 23 $\mu$m, there is concern about an excessive increase in pressure loss. If the average pore diameter exceeds 45 $\mu$m, there is concern about a decrease in contact area (specific surface area).

In the present invention, it is possible to set the specific surface area of the porous titanium-based sintered body of the first embodiment to 0.020 m$^2$/g to 0.065 m$^2$/g, and the specific surface area is made compatible with good gas permeability or liquid permeability. The lower limit side of the specific surface area of the porous titanium-based sintered body of the first embodiment of the present invention is preferably 0.025 m$^2$/g or more, and more preferably 0.030 m$^2$/g or more. The upper limit side of the specific surface area of the porous titanium-based sintered body of the first embodiment of the present invention is preferably 0.060 m$^2$/g or less, and more preferably 0.055 m$^2$/g or less. The specific surface area has great influence on the heat removal or the reaction efficiency. If the specific surface area is less than 0.020 m$^2$/g, the amount of a catalyst supported becomes insufficient, so that there is concern about an excessive decrease in the reaction area, and because the sites that come into contact with a gas or a liquid excessively decrease, there is also concern about, for example, insufficient cooling during heat removal. On the other hand, if the specific surface area is more than 0.065 m$^2$/g, the sites that come into contact with a gas or a liquid excessively increase, and therefore, there is concern about deterioration of gas permeability or liquid permeability.

The bending strength of the porous titanium-based sintered body of the first embodiment of the present invention is 22 MPa or more. In the porous titanium-based sintered body of the first embodiment of the present invention, the sintered area of the titanium-based powder that is a raw material is appropriately ensured, and therefore, a bending strength of 22 MPa or more can be attained. The bending strength of the porous titanium-based sintered body of the first embodiment of the present invention is preferably 25 MPa or more. The upper limit side of the bending strength of the porous titanium-based sintered body of the first embodiment of the present invention is not particularly limited, but it is preferably, for example, 65 MPa or less. The upper limit side of the bending strength of the porous titanium-based sintered body of the first embodiment of the present invention may be 45 MPa or less, or may be 35 MPa or less.

The porous titanium-based sintered body of the first embodiment of the present invention is one obtained by placing a titanium-based powder having an average circularity of 0.85 or less and having D10 of 40 $\mu$m or more and D50 of 65 $\mu$m to 100 $\mu$m, the D10 and the D50 being obtained by particle size distribution measurement, in a mold by dry process without substantially applying pressure, and sintering the powder at higher than 900°C and 1000°C or lower, preferably 920°C or higher and 1000°C or lower, more preferably 930°C or higher and 1000°C or lower, and therefore, it has a structure in which the area of a connection part of the titanium-based powder is large and the pore diameter is large, and has a high porosity, a large average pore diameter, a large specific surface area, a high strength, and good gas permeability or liquid permeability.

The electrode of the present invention is an electrode comprising the porous titanium-based sintered body of the present invention.

Since the porous titanium-based sintered body of the present invention is excellent in porosity, average pore diameter and specific surface area, it is useful as an electrode. Since the porous titanium-based sintered body of the present invention has attained a high strength, it does not easily undergo buckling or the like and is excellent in handling property in the fabrication of an electrode. The porous titanium-based sintered body of the present invention is preferable as an electrode of a fuel battery or an electrode of a large storage battery.

The present invention will be described in more detail with reference to an example, but this example is just an example and does not limit the present invention.

[Example]

In the following example, a titanium powder produced by a hydrogenation/dehydrogenation method and having a shape of a crushed product was used as a titanium-based powder. An average circularity, D10 and D50 of the titanium-based powder used are set forth in Table 1.

In the measurement, the average circularity was determined using PITA-3 (manufactured by SEISHIN ENTERPRISE CO., LTD.). D10 and D50 were determined in accordance with JIS:Z8825:2013 using a measuring device: LMS-350 (manufactured by SEISHIN ENTERPRISE CO., LTD.).

A difference of titanium powders between No. 1 and No. 4 will be described. Regarding both the titanium powders of No. 1 and No. 4, particles having particle diameters of more than 150 μm were removed using a sieve. Regarding No. 1, particles having particle diameters of less than 40 μm were further removed using a sieve, but regarding No. 4, particles having particle diameters of less than 40 μm were not removed.

(Example and Comparative Examples)

Each titanium-based powder was filled in a quartz mold under the drying and no-pressure application conditions, and a titanium-based powder having overflown and present above the upper edge of the mold was leveled off. That is to say, any excess force other than a force of leveling operation was not applied to the titanium-based powder. Thereafter, in environment in which the degree of vacuum was set to at least $3.0 \times 10^{-3}$ Pa, the mold filled with the titanium-based powder was placed, then the powder was sintered up to a sintering temperature shown in Table 1 at a temperature rise rate of 15°C/min, and sintering was carried out for 1 hour. After the sintering, the resulting sinter was cooled down to room temperature by furnace cooling, thereby obtaining a porous sintered body of the titanium-based powder.

The resulting porous titanium-based sintered body was subjected to analyses to determine a porosity, an average pore diameter, a specific surface area and a bending strength. The results are set forth in Table 1.

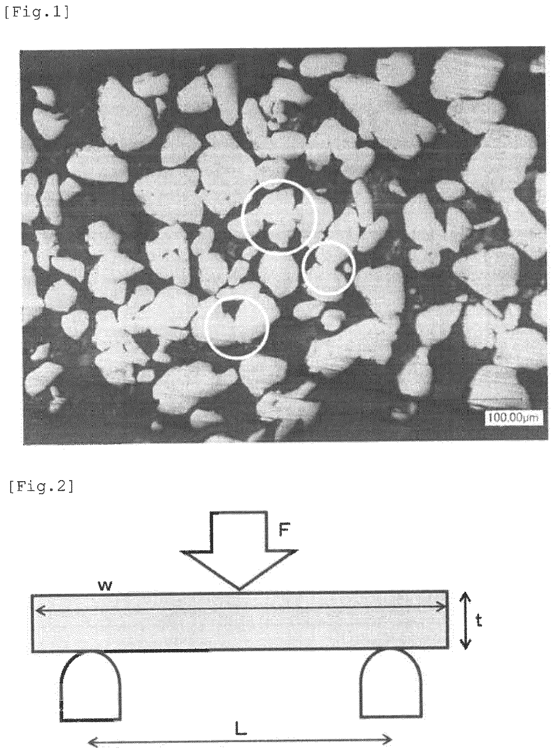

Regarding the measurement of the porosity, the aforesaid calculation method (calculation backward from relative density) was used to determine the porosity. The average pore diameter was measured by a strain-gauge type pressure measuring method using a mercury penetration measuring device manufactured by Micromeritics Instrument Corporation. The specific surface area was measured by a volumetric method using, as an adsorption gas Kr, BELSORP-Max manufactured by MicrotracBEL Corp. Regarding the bending strength, a maximum load was measured by a method whose outline is shown in Figure 2, using a universal testing machine manufactured by SHIMADZU CORPORATION, and it was converted into a bending strength.

[Table 1]

| No. | Titanium-based powder properties | | | Sintering temperature (°c) | Porosity (%) | Average pore diameter (μm) | Specific surface area (m²/g) | Bending strength (MPa) | Note |
|---|---|---|---|---|---|---|---|---|---|
| | Average circularity | D10 (μm) | D50 (μm) | | | | | | |
| 1 | 0.82 | 45 | 76 | 950 | 60 | 27 | 0.034 | 28.8 | invention example |

(continued)

| No. | Titanium-based powder properties | | | Sintering temperature (°c) | Porosity (%) | Average pore diamete r (μm) | Specific surface area (m$^2$/g) | Bending strengt h (MPa) | Note |
|---|---|---|---|---|---|---|---|---|---|
| | Average circularit y | D10 (μm ) | D50 (μm ) | | | | | | |
| 2 | 0.82 | 45 | 76 | 900 | 59 | 29 | 0.038 | 18.9 | comparativ e example |
| 3 | 0.77 | 22 | 36 | 900 | 62 | 16 | 0.083 | 36.9 | comparativ e example |
| 4 | 0.79 | 34 | 62 | 950 | 64 | 17 | 0.049 | 19.0 | comparativ e example |

As shown in Table 1, No. 1 that was the invention example attained a high strength while ensuring a high porosity, an average pore diameter and a specific surface area. In Figure 1, a result of optical microscope observation of the invention Example 1 is shown. In the invention Example 1, many portions in each of which the sintered area of the titanium-based powder was large (portions illustrated by white circles) were present, and therefore, it could be confirmed that the sintering proceeded more and the bending strength increased.

No. 2 that was a comparative example could not attain a high bending strength. In comparison between the result of No. 1 and that of No. 2, it is thought that control of the sintering temperature in the production of the porous titanium-based sintered body is important.

From the viewpoint of gas permeability or liquid permeability, there is room for improvement in No. 3 that was a comparative example because the specific surface area was too large. In comparison between No. 1 and No. 3, it is thought that control of the particle size distribution of the titanium-based powder that is a raw material is important.

No. 4 that was a comparative example was a sintered body obtained by sintering the titanium-based powder containing a fine powder of less than 40 μm. There is concern that desired gas permeability or liquid permeability cannot be ensured because of a small average pore diameter. In comparison with No. 1, there is room for increase in strength. In comparison between No. 1 and No. 4, the importance of controlling the quantity of fine powder was exhibited.

## Claims

1.  A porous titanium-based sintered body, having a porosity of 50% to 75%, an average pore diameter of 23 μm to 45 μm, and a specific surface area of 0.020 m$^2$/g to 0.065 m$^2$/g; and

    having a bending strength of 22 MPa or more,
    wherein the porosity, the average pore diameter, the specific surface area, and the bending strength are determined by the measurement methods defined in the description.

2.  An electrode comprising the porous titanium-based sintered body according to claim 1.

3.  A method for producing a porous titanium-based sintered body according to claim 1, comprising the step of placing a titanium-based powder having an average circularity of 0.85 or less and having D10 of 40 μm or more and D50 of 65 μm to 100 μm, the D10 and the D50 being obtained by particle size distribution measurement, in a mold by dry process without substantially applying pressure, and the step of sintering the powder at higher than 900°C and 1000°C or lower at a pressure of $5.0 \times 10^{-3}$ Pa or less,

    wherein the average circularity, the D10, and the D50 are determined by the measurement methods defined in the description, and
    wherein in the step of placing the titanium-based powder in the mold by dry process, excepting a force applied to the titanium-based powder under the titanium-based powder's own weight when the titanium-based powder is filled in the mold or a force applied to the upper surface of the titanium-based powder in the mold when the titanium-based powder that has overflown and is present above the upper edge of the mold is levelled off after filling of the titanium-based powder in the mold, the pressure of a force intendedly applied to the upper surface of the titanium-based powder in the mold is $1 \times 10^{-2}$ MPa or less.

4. The method for producing a porous titanium-based sintered body according to claim 3, wherein a material of the mold is quartz, alumina, carbon, calcia, magnesia, zirconia, or boron nitride.

**Patentansprüche**

1. Poröser Sinterkörper auf Titanbasis mit einer Porosität von 50% bis 75%, einem durchschnittlichen Porendurchmesser von 23 $\mu$m bis 45 $\mu$m und einer spezifischen Oberfläche von 0,020 m$^2$/g bis 0,065 m$^2$/g; und

   mit einer Biegefestigkeit von 22 MPa oder mehr,
   wobei die Porosität, der durchschnittliche Porendurchmesser, die spezifische Oberfläche und die Biegefestigkeit durch die in der Beschreibung definierten Messverfahren bestimmt werden.

2. Elektrode, umfassend den porösen Sinterkörper auf Titanbasis nach Anspruch 1.

3. Verfahren zur Herstellung eines porösen Sinterkörpers auf Titanbasis gemäß Anspruch 1, umfassend den Schritt des Einbringens eines Pulvers auf Titanbasis mit einer durchschnittlichen Rundheit von 0,85 oder weniger und mit D10 von 40 $\mu$m oder mehr und D50 von 65 $\mu$m bis 100 $\mu$m, wobei D10 und D50 durch Messung der Teilchengrößenverteilung erhalten werden, in eine Form durch ein Trockenverfahren ohne wesentliche Anwendung von Druck, und den Schritt des Sinterns des Pulvers bei höher als 900°C und 1000°C oder niedriger bei einem Druck von 5,0$\times$10$^{-3}$ Pa oder weniger,

   wobei die durchschnittliche Rundheit, der D10 und der D50 durch die in der Beschreibung definierten Messmethoden bestimmt werden, und
   wobei in dem Schritt des Einbringens des Pulvers auf Titanbasis in die Form durch ein Trockenverfahren, mit Ausnahme einer Kraft, die auf das Pulver auf Titanbasis unter dem Eigengewicht des Pulvers auf Titanbasis ausgeübt wird, wenn das Pulver auf Titanbasis in die Form gefüllt wird, oder einer Kraft, die auf die obere Oberfläche des Pulvers auf Titanbasis in der Form ausgeübt wird, wenn das Pulver auf Titanbasis, das übergelaufen ist und oberhalb der oberen Kante der Form vorhanden ist, nach dem Füllen des Pulvers auf Titanbasis in die Form eingeebnet wird, der Druck einer Kraft, die beabsichtigt auf die obere Oberfläche des Pulvers auf Titanbasis in der Form ausgeübt wird 1$\times$10$^{-2}$ MPa oder weniger beträgt.

4. Verfahren zur Herstellung eines porösen Sinterkörpers auf Titanbasis nach Anspruch 3, wobei ein Material der Form Quarz, Aluminiumoxid, Kohlenstoff, Calciumoxid, Magnesiumoxid, Zirkoniumoxid oder Bornitrid ist.

**Revendications**

1. Corps fritté à base de titane poreux, ayant une porosité de 50 % à 75 %, un diamètre de pore moyen de 23 $\mu$m à 45 $\mu$m, et une surface spécifique de 0,020 m$^2$/g à 0,065 m$^2$/g ; et

   ayant une résistance à la flexion de 22 MPa ou plus,
   dans lequel la porosité, le diamètre de pore moyen, la surface spécifique et la résistance à la flexion sont déterminés par les procédés de mesure définis dans la description.

2. Électrode comprenant le corps fritté à base de titane poreux selon la revendication 1.

3. Procédé de production d'un corps fritté à base de titane poreux selon la revendication 1, comprenant l'étape de placement d'une poudre à base de titane ayant une circularité moyenne de 0,85 ou moins et ayant D10 de 40 $\mu$m ou plus et D50 de 65 $\mu$m à 100 $\mu$m, le D10 et le D50 étant obtenus par mesure de distribution de taille particulaire, dans un moule par processus sec sans appliquer essentiellement de pression, et l'étape de frittage de la poudre à une température supérieure à 900 °C et 1000 °C ou inférieure à une pression de 5,0$\times$10$^{-3}$ Pa ou moins,

   dans lequel la circularité moyenne, le D10 et le D50 sont déterminés par les procédés de mesure définis dans la description, et
   dans lequel dans l'étape de placement de la poudre à base de titane dans le moule par processus sec, à l'exception d'une force appliquée à la poudre à base de titane sous le propre poids de la poudre à base de titane lorsque la poudre à base de titane est versée dans le moule ou d'une force appliquée à la surface supérieure de la poudre à base de titane dans le moule lorsque la poudre à base de titane qui a débordée et est présente au-dessus du bord supérieur du moule est nivelée après versement de la poudre à base de titane dans le moule, la pression d'une force appliquée délibérément à la surface supérieure de la poudre à base de titane dans le moule est de $1,10^{-2}$ MPa ou moins.

4. Procédé de production d'un corps fritté à base de titane poreux selon la revendication 3, dans lequel un matériau du moule est du quartz, de l'alumine, du carbone, de l'oxyde de calcium, de la magnésie, de l'oxyde de zirconium ou du nitrure de bore.

[Fig.1]

[Fig.2]

**EP 3 769 867 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004149842 A
- JP 2012172179 A
- JP 2002066229 A
- JP 2007262570 A